# DEMANDE DE BREVET EUROPEEN

(11) **EP 2 065 261 A1**
(43) Date de publication de la demande: **03.06.2009**
(21) Numéro de dépôt: 08167291.7
(22) Date de dépôt: 22.10.2008
(51) Int. Cl.: B60R 19/18, B60R 19/04

(54) **Peau de pare-choc pour un module avant de véhicule automobile et véhicule automobile associé.**

(30) Priorité: 12.11.2007 FR 0758956
(71) Demandeur: Faurecia Bloc Avant, 92000 Nanterre (FR)
(72) Inventeur: Gillard, Laurent, 25110, VOILLANS (FR); Imbert, Didier, 70200, FROIDETERRE (FR)
(74) Mandataire: Jacobson, Claude

(57) **Abrégé**

Cette peau comprend un corps (60) comportant une partie centrale (62) transversale et deux parties latérales (64) incurvées vers l'arrière

Chaque partie latérale (64) définit une ossature ajourée (82) de renfort mécanique s'étendant vers le haut jusqu'à un bord supérieur de liaison (74) au bloc optique (24) et vers l'arrière jusqu'à un bord arrière de liaison (76) à l'aile (38) ;

Chaque partie latérale (64) définit une surface d'indexation du bloc optique, propre à recevoir en appui une surface du bloc optique (24), et une surface d'indexation de l'aile, propre à recevoir en appui une surface de l'aile (38).

La peau (20) comprend en outre un cache (66), rapporté sur l'ossature de renfort (82) et s'étendant jusqu'au bord supérieur de liaison (74) et jusqu'au bord arrière de liaison (76) pour couvrir l'ossature de renfort (82) et lesdites surfaces d'indexation depuis l'extérieur du véhicule.

## Description

La présente invention concerne une peau de pare-choc pour un ensemble avant de véhicule automobile, la peau étant du type comprenant une peau de pare-choc pour un ensemble avant de véhicule automobile, la peau étant du type comprenant un corps comportant une partie centrale transversale et deux parties latérales incurvées vers l'arrière par rapport à la partie centrale, chaque partie latérale définissant un bord supérieur de liaison à un bloc optique et un bord arrière de liaison à une aile du véhicule.

De manière classique, on connaît des peaux de pare-choc comprenant une partie centrale s'étendant en regard de la poutre de pare-choc pour la couvrir, et deux parties latérales incurvées vers l'arrière par rapport à la partie centrale, généralement dénommés « crosses ».

Les parties latérales présentent un bord supérieur de liaison au bloc optique et un bord arrière de liaison à une aile, situé à l'arrière de la peau.

Pour satisfaire les critères de qualité et d'aspect extérieur de la peau de pare-choc une fois montée sur le véhicule, il est connu de rapporter dans la crosse, à l'arrière de la peau, des moyens de renfort mécanique pour assurer une rigidité subjective au toucher lorsqu'un utilisateur s'appuie légèrement sur la partie latérale de la peau. Il est en outre connu de rapporter, entre la peau et le bloc optique, et entre la peau et l'aile, des guides d'indexage de la peau, pour positionner la peau de manière précise par rapport à l'aile et par rapport au bloc optique.

Pour obtenir une bonne qualité finale, le montage de la peau s'avère donc fastidieux et coûteux, puisqu'il nécessite de rapporter sur la peau un grand nombre de pièces additionnelles.

Un but de l'invention est donc d'obtenir une peau de pare-choc pour un ensemble avant de véhicule automobile, qui soit simple et peu coûteuse à assembler sur le véhicule, tout en garantissant une qualité et un aspect esthétique satisfaisant.

A cet effet, l'invention a pour objet une peau de pare-choc du type précité, caractérisée en ce que chaque partie latérale définit une ossature ajourée de renfort mécanique s'étendant vers le haut jusqu'au bord supérieur de liaison et vers l'arrière jusqu'au bord arrière de liaison ;
chaque partie latérale définissant :
- une surface d'indexation du bloc optique, propre à recevoir en appui une surface complémentaire du bloc optique, et
- une surface d'indexation de l'aile, propre à recevoir en appui une surface complémentaire de l'aile ;
la peau comprenant en outre un cache, rapporté sur l'ossature de renfort et s'étendant jusqu'au bord supérieur de liaison et jusqu'au bord arrière de liaison pour couvrir l'ossature de renfort et lesdites surfaces d'indexation depuis l'extérieur du véhicule.

La peau de pare-choc selon l'invention peut comprendre l'une ou plusieurs des caractéristiques suivantes, prises isolément ou suivant tout combinaison techniquement possible :
- les surfaces d'indexation du bloc optique et de l'aile s'étendent respectivement le long du bord supérieur de liaison et le long du bord arrière de liaison ;
- la peau comprend une saillie d'indexation verticale de l'aile, qui fait saillie à l'écart de la surface d'indexation de l'aile.
- l'ossature de renfort comprend une pluralité de poutres délimitant entre elles des ouvertures traversantes, les ouvertures traversantes débouchant dans une surface avant et dans une surface arrière de la peau.
- la partie centrale délimite une ouverture centrale de passage d'air de refroidissement s'étendant entre deux bords latéraux, chaque ossature ajourée s'étendant exclusivement à l'extérieur et à l'écart des bords latéraux de l'ouverture centrale de passage d'air par rapport à un axe central du véhicule.
- elle comprend des moyens d'encliquetage du cache sur la partie latérale.
- la partie centrale et les parties latérales comprenant l'ossature ajourée de renfort sont venues de matière.

L'invention a en outre pour objet un ensemble avant de véhicule automobile caractérisé en ce qu'il comprend :
- des éléments de caisse ;
- au moins deux blocs optiques situés de part et d'autre des éléments de caisse par rapport à un axe central du véhicule ;
- au moins deux ailes latérales fixées latéralement sur les éléments de caisse ; et
- une peau de pare-choc telle que définie ci-dessus, la surface d'indexation du bloc optique située sur la partie latérale étant disposée en appui sur une surface complémentaire du bloc optique, et la surface d'indexation de l'aile située sur la partie latérale étant disposée en appui sur une surface complémentaire située sur l'aile.

L'ensemble avant selon l'invention peut comprendre une poutre de pare-choc distincte et espacée de l'ossature de renfort, la poutre de pare-choc s'étendant en regard de la partie centrale à l'arrière de la peau.

L'invention sera mieux comprise à la lecture de la description qui va suivre, donnée uniquement à titre d'exemple, et faite en se référant aux dessins annexés, sur lesquels :
- la Figure 1 est une vue partielle en perspective d'un premier ensemble avant selon l'invention ;
- la Figure 2 est une vue en coupe suivant un plan vertical longitudinal marqué Il sur la Figure 1 ; et
- la Figure 3 est une vue en coupe suivant un plan vertical transversal marqué III sur la Figure 1.

Dans tout ce qui suit, les orientations sont les orientations habituelles d'un véhicule automobile. Ainsi, les termes « gauche », « droite », « supérieur », « inférieur », « haut », « bas », « transversal », « longitudinal », « avant », « arrière » s'entendent par rapport aux orientations habituelles d'un véhicule automobile et à la position du conducteur.

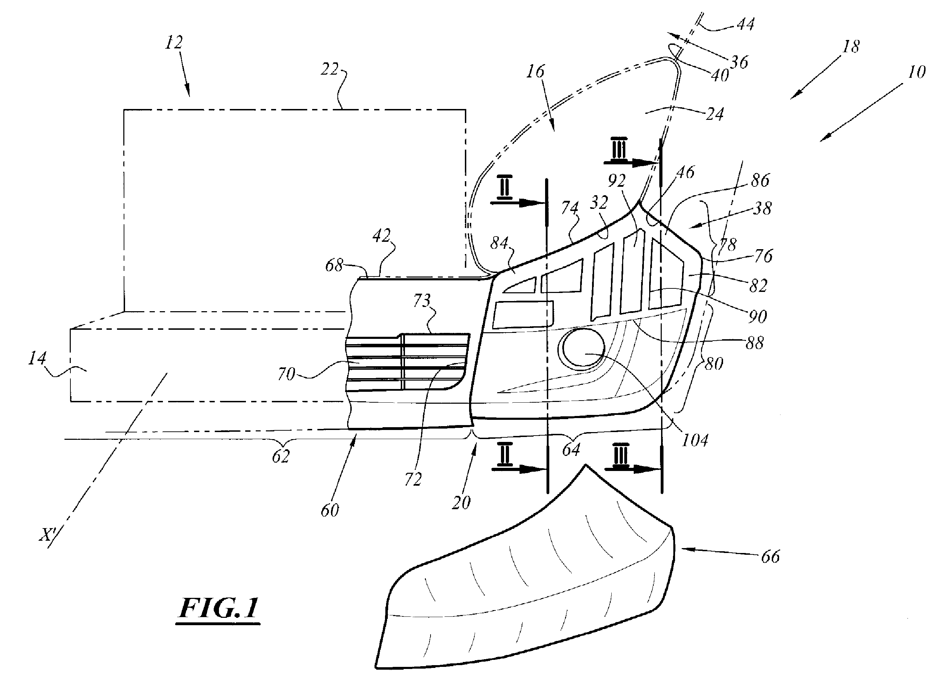

Un premier ensemble avant 10 selon l'invention est représenté sur les Figures 1 à 3.

Comme illustré par la Figure 1, cet ensemble avant 10 comprend des éléments de caisse 12 et, fixés sur les éléments de caisse 12, une poutre de pare-choc transversale 14, des projecteurs 16, et des panneaux de carrosserie 18.

L'ensemble avant 10 comprend en outre une peau de pare-choc 20 selon l'invention fixée à l'avant de la poutre 14, des éléments de carrosserie 18 et des projecteurs 16.

De manière classique, les éléments de caisse 12 comprennent des longerons longitudinaux (non représentés) et un élément transversal de structure 22 fixé entre les longerons à l'arrière de la poutre 14 et à l'avant du moteur (non représenté). Cet élément 22 est par exemple une face avant technique portant au moins un ventilateur.

La poutre 14 de pare-choc est réalisée à base d'un profilé transversal s'étendant transversalement et horizontalement entre les longerons, sur sensiblement toute la largeur du véhicule.

La poutre 14 présente une extrémité gauche (non visible sur la Figure 1) et une extrémité droite s'étendant sous le projecteur 16.

Le projecteur 16 est généralement fixé latéralement sur l'élément transversal 22. Il comprend un bloc optique 24 présentant une vitre couvrant au moins une lampe (non représentée).

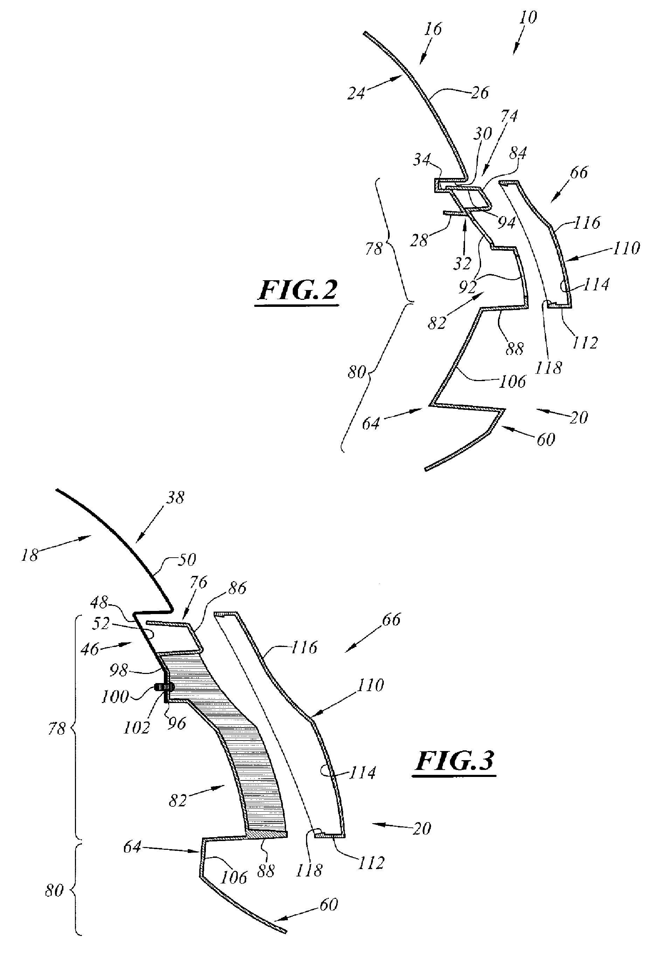

Comme illustré par la Figure 2, le bloc optique 24 comprend un corps supérieur 26 et une lèvre inférieure 28 d'appui sur la peau 20, la lèvre 28 délimitant avec le corps supérieur 26 une fente 30 d'insertion de la peau 20.

La lèvre 28 et la fente 30 s'étendent parallèlement à un bord inférieur 32 du bloc optique 24.

La lèvre 28 délimite dans la fente 30 une surface supérieure 34 sensiblement horizontale d'indexation verticale de la peau 20, dirigée vers le haut.

De manière classique, les panneaux de carrosserie 18 comprennent un capot moteur 36, couvrant les éléments de caisse 12 et le moteur vers le haut, et des ailes latérales 38, couvrant latéralement les éléments de caisse 12 et le moteur.

Le capot 36 présente un bord gauche 40 qui s'étend le long du projecteur au-dessus de celui-ci et le long de l'aile 38.

Il comprend en outre un bord inférieur 42 sensiblement horizontal s'étendant le long de la peau entre les projecteurs 16. Les bords 40, 42 du capot 36 sont de formes complémentaires aux bords opposés de l'aile 38, du projecteur 16, et de la peau 20 pour minimiser le jeu entre ces éléments.

L'aile 38 présente un bord supérieur 44 s'étendant le long du bord latéral 40 du capot 36 et le long d'un bord latéral arrière du projecteur 16. L'aile 38 présente en outre un bord avant 46 s'étendant le long de la peau 22.

Comme illustré par la Figure 3, l'aile 38 délimite, le long de son bord avant 46, une paroi 48 d'indexation sur la peau 20 définissant un épaulement en retrait par rapport à une paroi supérieure 50 d'aspect, visible depuis l'extérieur du véhicule. La paroi d'indexation 48 présente une surface extérieure 52 d'appui sur la peau 20 comme on le verra plus bas.

Comme illustré par les Figures 1 à 3, la peau 20 comprend un corps 60 venu de matière, qui comporte une partie centrale 62 et deux parties latérales 64 (ou « crosses »). La peau 20 comprend en outre, pour chaque partie latérale 64, un cache 66 rapporté sur la partie latérale 64.

Le corps 60 comprenant la partie centrale 62 et les parties latérales 64 est réalisé d'un seul tenant par injection de matière plastique dans un moule.

La partie centrale 62 s'étend à l'avant et en regard de la poutre 14 de pare-choc pour masquer la poutre 14. Elle présente un bord supérieur 68 horizontal s'étendant le long du bord inférieur 42 du capot 36.

La partie centrale 62 est située transversalement entre les projecteurs 16 par rapport à un axe central X-X' longitudinal du véhicule.

La partie centrale 62 délimite une ouverture longitudinale 70 de passage d'air de refroidissement du moteur, destinée à alimenter en air de refroidissement le ou chaque ventilateur porté par la face avant 22. L'ouverture 70 est délimitée latéralement à droite et à gauche par deux bords latéraux 72 verticaux, et vers le haut, par un bord supérieur 73.

Les parties latérales 64 font saillie vers l'arrière du véhicule, à partir de la partie centrale 62 en étant incurvées vers l'arrière.

Chaque partie latérale 64 s'étend sous un projecteur 16, et à l'avant de l'aile 38. Chaque partie latérale 64 présente ainsi un bord supérieur 74 s'étendant sous et le long du bord inférieur 32 du projecteur 16, et un bord arrière 76 s'étendant à l'avant et le long du bord avant 46 de l'aile.

Comme illustré par la Figure 1, la partie latérale 64 comprend une région supérieure 78 couverte par le cache 66 et munie de moyens de renfort mécanique et de positionnement par rapport au bloc optique 24 et à l'aile 38. La partie latérale comprend également une région inférieure 80 découverte.

La région supérieure 78 définit une ossature 82 ajourée de renfort mécanique s'étendant jusqu'au bord supérieur 74 et jusqu'au bord arrière 76. L'ossature 82 est située latéralement à l'écart et à l'extérieur de bords latéraux 72 de l'ouverture centrale 70, au-dessus du bord supérieur 73.

L'ossature 82 comprend ainsi une traverse supérieure 84 profilée s'étendant le long du bord supérieur 74, un montant arrière 86 profilé s'étendant le long du bord arrière 76, et une paroi inférieure horizontale 88 d'appui du cache 66.

L'ossature 82 comprend en outre une pluralité de poutres 90 structurelles de renfort s'étendant entre la traverse 84, le montant 86 et la paroi inférieure 88, et délimitant des ouvertures traversantes 92.

La traverse 84 délimite une surface inférieure horizontale 94 d'indexation du bloc optique qui reçoit en appui la surface supérieure 34 de la lèvre 28 du bloc 24. La surface d'indexation 94 s'étend sensiblement sur toute la longueur du bord supérieur 74. La traverse 84 forme en outre une butée avant pour la lèvre inférieure 28 de positionnement.

Le montant arrière 80 s'étend le long du bord arrière 76. Il est prolongé vers le bas par un rebord 87 d'appui de la paroi d'indexation 48 de l'aile 38. Le rebord 87 présente une surface intérieure 98 d'indexation sensiblement verticale, de forme complémentaire à la surface extérieure 52 de la paroi d'indexation 48.

Le rebord 87 est en outre muni d'un pion 100 d'indexation verticale de l'aile 38. Le pion 100 fait saillie horizontalement vers l'intérieur du véhicule. Le pion 100 est inséré dans une ouverture correspondante 102 ménagée à travers la paroi d'indexation 48 pour bloquer horizontalement la peau 20 par rapport à l'aile 38.

Les poutres 88 s'étendent généralement verticalement, parallèlement les unes aux autres. Elles sont destinées à être plaquées contre le cache 66, pour offrir une rigidité suggestive à un utilisateur du véhicule lorsqu'il appuie à l'extérieur du cache 66 vers l'intérieur du véhicule.

Les ouvertures 92 sont traversantes à travers la peau 20, de sorte qu'elles débouchent dans une surface avant et dans une surface arrière de la peau 20.

Dans la région supérieure 78, le rapport de la surface vide délimitée par les ouvertures 92 à la surface pleine occupée par les poutres 90, le montant arrière 86 et la traverse supérieure 84, est supérieur à 2, de sorte que l'ossature 82 est très ajourée.

La paroi inférieure 88 s'étend dans un plan sensiblement horizontal au-dessus de la région inférieure 80 et au-dessus de l'ouverture longitudinale 70 d'introduction d'air.

La région inférieure 80 est plus pleine que la région supérieure 78. Elle délimite une ouverture 104 de passage d'un phare qui débouche dans une région creuse 26 délimitée vers le haut par la paroi inférieure 88.

Comme illustré par les Figures 1 à 3, le cache de masquage 66 présente une forme complémentaire à celle de la région supérieure 78 de la partie latérale 64 sur laquelle il est rapporté.

Le cache 66 présente une paroi extérieure 110 de masquage de la région supérieure 78, et une paroi périphérique 112 de fixation sur la partie latérale 64 autour de la région supérieure 78.

La paroi de masquage 110 présente un contour sensiblement complémentaire à celui de la région supérieure 78 qu'elle couvre. Elle délimite une surface intérieure 114 de section, prise dans un plan vertical longitudinal, complémentaire à la section extérieure des poutres 90, de la traverse 84, et du montant 86 pour être plaquée contre la traverse 84, le montant 86 et les poutres 90 lorsque le cache 66 est monté autour de la région 78.

La paroi 110 présente en outre une surface extérieure 116 d'aspect qui peut être décorée ou peinte pour améliorer l'aspect esthétique du véhicule depuis l'extérieur.

La paroi périphérique 112 fait saillie vers l'arrière à partir de la paroi extérieure 110. Elle définit des ergots d'encliquetage 118 destinés à pénétrer dans des ouvertures correspondantes (non représentées) ménagées dans la traverse supérieure 84, dans le montant arrière 86, et dans la paroi inférieure 88.

La paroi de fixation 112 présente un contour intérieur de forme complémentaire aux contours extérieurs de la région 78. Ainsi, lorsque le cache 66 est monté sur la partie latérale 64, la paroi de fixation 112 est en contact avec le montant 84 au-dessus de celui-ci, avec la traverse arrière 86 à l'arrière de celle-ci et avec la paroi inférieure 88 au dessous de celle-ci. Ainsi, la paroi extérieure 110 couvre totalement l'ossature de renfort mécanique 82 et les surfaces d'indexation 94 et 98 depuis l'extérieur du véhicule.

Le procédé de fabrication et de montage de l'ensemble avant 10 selon l'invention va maintenant être décrit.

Initialement, la peau 20 est moulée par injection d'un seul tenant en ménageant l'ouverture longitudinale 70 dans la partie centrale 62, l'ossature ajourée 82 dans la région supérieure 78 des parties latérales 64, et l'ouverture 104 de passage d'un phare dans la région inférieure 80 des parties latérales. En outre, les surfaces d'indexation 94 et 98 sont moulées avec des dimensions adéquates lors de cette étape.

La partie centrale 62 et les parties latérales 64 sont ainsi venues de matière, ce qui permet de disposer d'une peau 20 présentant des surfaces d'indexation 94, 98 sur le bloc optique 24 et sur l'aile 38, et une ossature 82 de renfort mécanique sans qu'il soit nécessaire de rapporter sur la peau 20 des pièces supplémentaires.

Puis, la poutre de pare-choc 14 et la face avant technique 22 sont montées sur les longerons 12 avec les projecteurs 16 et les ailes 38.

La peau 20 est ensuite amenée à l'avant du véhicule. La partie centrale 62 est placée à l'avant et en regard de la poutre 14, et les parties latérales 64 sont disposées sous les blocs optiques 24 et à l'avant des ailes 38.

Les surfaces d'indexation 94, 98 étant intégrées dans la peau 20, le positionnement relatif de la peau 20 par rapport au projecteur 16 et à l'aile 38 est facilité, puisqu'il suffit de réaliser un simple appui de ces surfaces 94, 98 contre les surfaces complémentaires 34, 52 du projecteur 16 et de l'aile 38.

Une fixation définitive de la peau 20 par rapport au projecteur 16 et à l'aile 28 est alors réalisée. Puis, le cache 66 est amené en regard de la région supérieure 78. La partie périphérique 112 est alors engagée et encliquetée autour de la traverse supérieure 84, du montant 80 et de la paroi 88, jusqu'à ce que la paroi extérieure 110 couvre et masque l'ossature 82 et les surfaces 94 et 96 depuis l'extérieur du véhicule.

Les poutres 90, la traverse 80 et le montant arrière 86 sont alors au contact de la surface intérieure 114 de la paroi 110, ce qui assure une rigidité subjective pour l'utilisateur du véhicule lorsqu'il appuie sur la surface extérieure 116 de la paroi 110.

## Revendications

1. Peau (20) de pare-choc pour un ensemble avant (10) de véhicule automobile, la peau (20) étant du type comprenant un corps (60) comportant une partie centrale (62) transversale et deux parties latérales (64) incurvées vers l'arrière par rapport à la partie centrale (62), chaque partie latérale (64) définissant :
- un bord supérieur (74) de liaison à un bloc optique (24) ;
- un bord arrière (76) de liaison à une aile (38) du véhicule ;
**caractérisé en ce que** chaque partie latérale (64) définit une ossature ajourée (82) de renfort mécanique s'étendant vers le haut jusqu'au bord supérieur de liaison (74) et vers l'arrière jusqu'au bord arrière de liaison (76) ;
chaque partie latérale (64) définissant :
- une surface (94) d'indexation du bloc optique, propre à recevoir en appui une surface complémentaire (34) du bloc optique (24), et
- une surface (98) d'indexation de l'aile, propre à recevoir en appui une surface complémentaire (52) de l'aile (38) ;
la peau (20) comprenant en outre un cache (66), rapporté sur l'ossature de renfort (82) et s'étendant jusqu'au bord supérieur de liaison (74) et jusqu'au bord arrière de liaison (76) pour couvrir l'ossature de renfort (82) et lesdites surfaces d'indexation (94, 98) depuis l'extérieur du véhicule.

2. Peau de pare-choc (20) selon la revendication 1, **caractérisé en ce que** les surfaces d'indexation du bloc optique et de l'aile (94, 98) s'étendent respectivement le long du bord supérieur de liaison (94) et le long du bord arrière de liaison (98).

3. Peau de pare-choc (20) selon l'une des revendications 1 ou 2, **caractérisée en ce que** la peau (20) comprend une saillie (100) d'indexation verticale de l'aile (38), qui fait saillie à l'écart de la surface (98) d'indexation de l'aile.

4. Peau de pare-choc (20) selon l'une quelconque des revendications précédentes, **caractérisée en ce que** l'ossature de renfort (82) comprend une pluralité de poutres (90) délimitant entre elles des ouvertures traversantes (92), les ouvertures traversantes (92) débouchant dans une surface avant et dans une surface arrière de la peau.

5. Peau de pare-choc (20) selon l'une quelconque des revendications précédentes, **caractérisée en ce que** la partie centrale (62) délimite une ouverture centrale (70) de passage d'air de refroidissement s'étendant entre deux bords latéraux (77), chaque ossature ajourée (82) s'étendant exclusivement à l'extérieur et à l'écart des bords latéraux (72) de l'ouverture centrale de passage d'air (70) par rapport à un axe central (X-X') du véhicule.

6. Peau de pare-choc (20) selon l'une quelconque des revendications précédentes, **caractérisée en ce qu'**elle comprend des moyens (118) d'encliquetage du cache (66) sur la partie latérale (64).

7. Peau de pare-choc (20) selon l'une quelconque des revendications précédentes, **caractérisé en ce que** la partie centrale (62) et les parties latérales (64) comprenant l'ossature ajourée de renfort (82) sont venues de matière.

8. Peau de pare-choc (20) selon l'une quelconque des revendications précédentes, **caractérisé en ce que** le cache (66) présente :
- une paroi extérieure (110) de masquage d'une région supérieure (78) de la partie latérale (64), la région supérieure définissant l'ossature ajourée de renfort, et
- une paroi périphérique (112) de fixation sur la partie latérale (64), la paroi de fixation (112) présentant un contour intérieur de forme complémentaire au contour extérieur de ladite région supérieure (78).

9. Ensemble avant (10) de véhicule automobile, du type comprenant :
- des éléments de caisse (12) ;
- au moins deux blocs optiques (24) situés de part et d'autre des éléments de caisse (12) par rapport à un axe central (X-X') du véhicule ;
- au moins deux ailes latérales (38) fixées latéralement sur les éléments de caisse (12) ; et
- une peau de pare-choc (20) selon l'une quelconque des revendications précédentes, la surface (94) d'indexation du bloc optique située sur la partie latérale (64) étant disposée en appui sur une surface complémentaire (34) du bloc optique (24), et la surface (98) d'indexation de l'aile située sur la partie latérale (64) étant disposée en appui sur une surface complémentaire (52) située sur l'aile (38).

10. Ensemble avant (10) selon la revendication 9, **caractérisé en ce qu'**il comprend une poutre de pare-choc (14) distincte et espacée de l'ossature de renfort (82), la poutre de pare-choc (14) s'étendant en regard de la partie centrale (62) à l'arrière de la peau (20).
